# EUROPEAN PATENT APPLICATION

(11) **EP 3 026 611 A1**
(43) Date of publication of application: **01.06.2016**
(21) Application number: 15156890.4
(22) Date of filing: 27.02.2015
(51) Int. Cl.: G06Q 10/06

(54) **Report data management device, non-transitory computer-readable storage medium storing report data management program, and report data management method**

(30) Priority: 26.11.2014 JP 2014238970
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A report data management system (for example, a report data management system or a report data management server. The same applies hereinafter.) is a system that is run by an ERP and manages report data generated for each business unit in a business process, and includes a report data storage unit (for example, a process flow DB) that stores report data, performs control such that the report data is selectably displayed in the form of a list, performs control such that at least one or more pieces of report data among report data displayed in the form of a list is selected and the report data is copied and displayed so that partial data of the selected report data is rewritable, receives a rewrite input, and stores the data for which the rewrite input is received in the report data storage unit as the new report data.

## Description

### BACKGROUND

### Technical Field

The present invention relates a report data management device that serves as a device run by an enterprise resource planning (hereinafter, "ERP") and manages report data generated for each business unit in a business process, a non-transitory computer-readable storage medium storing a report data management program for controlling a corresponding server, and a report data management method.

### Related Art

Heretofore, there is an electronic report system capable of electronically managing report data collectively. For example, an electronic report system including a plurality of terminals that create reports through a report creating unit and a management computer that is connected with the terminals via a network and electronically manages the reports created by the terminals (see Patent Literature 1) is disclosed.

In the electronic report system disclosed in Patent Literature 1, first, each of the management terminals creates print management information and a print spool file of a report through a spool file creating unit and then converts the print management information and the print spool file of the report and report specific information of the report input through a certain input screen into one PostScript file through a first file converting unit. Then, the management computer creates report management information and a report data file based on the PostScript file through a second file converting unit, and stores the report data file in a database according to content of the report management information and manages the report data file through a file managing unit.

### Citation List

### Patent Literature

Patent Literature 1: JP 2008-158727 A

### SUMMARY

However, the electronic report system of the related art disclosed in Patent Literature 1 has a problem in that a data input burden is large when new report data is generated through a manual input.

The present invention was made to solve the above problem, and it is an object of the present invention to reduce a data input burden when new report data is generated and managed.

A report data management device according to the present invention is a report data management device that is run by an ERP and manages report data generated for each business unit in a business process, and includes a report data storage unit that stores report data, a list display control unit that performs control such that the report data is selectably displayed in a form of a list, a selection receiving unit that receives selection of at least one or more pieces of report data among the report data displayed in the form of the list, a copy display control unit that performs control such that the report data is copied and displayed such that partial data of the selected report data is rewritable, a rewrite input receiving unit that receives a rewrite input, and a storing unit that stores data for which the rewrite input is received in the report data storage unit as new report data.

Through the above configuration, it is possible to reduce a data input burden when new report data is generated and managed.

The report data management device may further include a condition input receiving unit that receives an input of an extraction condition for extracting report data that is displayed in a form of a list and an extracting unit that extracts the report data corresponding to the input extraction condition, the list display control unit may perform control such that the report data extracted by the extracting unit is displayed in the form of the list, and the copy display control unit may perform control such that the selected report data is copied and displayed such that at least one of items other than an item corresponding to the input extraction condition is rewritable.

The report data management device may further include an orderer data storage unit that stores orderer data including a credit limit of an orderer, a credit determining unit that determines whether or not a transaction in which the credit limit is exceeded is made with reference to the orderer data when the rewrite input is received, and a result display control unit that performs control such that a determination result is displayed before the data is stored in the report data storage unit as the new report data.

The report data management device may further include an orderer information display control unit that performs control such that an orderer information display region for displaying detailed information of an orderer shown in the report data displayed in the form of the list is displayed as a predetermined user input is received when the report data is displayed in the form of the list, and the orderer information display control unit may perform control with reference to the orderer data such that the orderer information display region is displayed.

The list display control unit may be configured to perform control such that the report data is displayed in the form of the list such that a progress of the business process is understood.

Further, a report data management program according to the present invention is a non-transitory computer-readable storage medium storing a report data management program for controlling an operation of a report data management device that is run by an ERP, manages report data generated for each business unit in a business process, and includes a report data storage unit storing the report data, and causes the report data management device to execute a list display control process of performing control such that the report data is selectably displayed in a form of a list, a selection receiving process of receiving selection of at least one or more pieces of report data among the report data displayed in the form of the list, a copy display control process of performing control such that the report data is copied and displayed such that partial data of the selected report data is rewritable, a rewrite input receiving process of receiving a rewrite input, and a storing process of storing data for which the rewrite input is received in the report data storage unit as new report data.

Further, a report data management method according to the present invention is a report data management method of managing report data generated for each business unit in a business process through a computer run by an ERP, and includes a list display control process of performing control such that the report data is selectably displayed in a form of a list with reference to a report data storage unit storing the report data, a selection receiving process of receiving selection of at least one or more pieces of report data among the report data displayed in the form of the list, a copy display control process of performing control such that the report data is copied and displayed such that partial data of the selected report data is rewritable, a rewrite input receiving process of receiving a rewrite input, and a storing process of storing data for which the rewrite input is received in the report data storage unit as new report data.

According to the present invention, it is possible to reduce a data input burden when new report data is generated and managed.

### BRIEF DESCRIPTION OF DRAWINGS

FIG. 1 is a block diagram illustrating an exemplary configuration of a report data management system;
FIG. 2 is a block diagram illustrating an exemplary configuration of a report data management server;
FIG. 3 is an explanatory diagram illustrating an exemplary storage state of process flow data;
FIG. 4 is a flowchart illustrating an exemplary new registration process;
FIG. 5 is an explanatory diagram illustrating an exemplary new registration screen;
FIGS. 6A to 6C are explanatory diagrams illustrating an exemplary extract item input region in a new registration screen;
FIG. 7 is an explanatory diagram illustrating an exemplary new registration screen on which extracted report data is displayed;
FIG. 8 is an explanatory diagram illustrating an exemplary new registration screen in which selection of report data is performed;
FIG. 9 is an explanatory diagram illustrating an exemplary new registration screen on which copy data of selected report data is displayed;
FIG. 10 is an explanatory diagram illustrating an exemplary new registration screen on which detailed information of an orderer is displayed; and
FIG. 11 is an explanatory diagram illustrating an exemplary new registration screen in which report data is displayed in the form of a list so that the progress of a business process can be understood.

### DETAILED DESCRIPTION

Hereinafter, an embodiment of the present invention will be described with reference to the accompanying drawings.

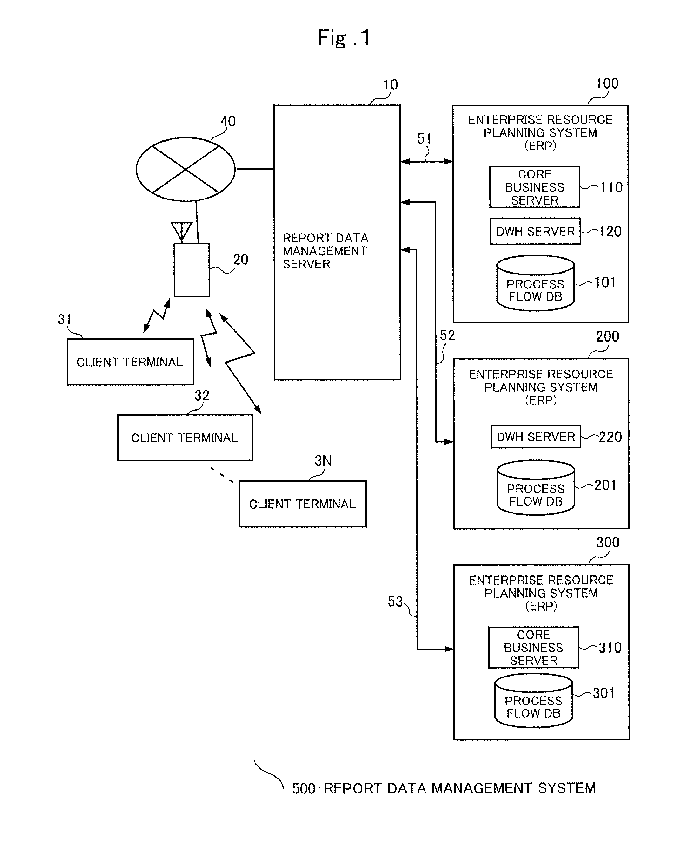

FIG. 1 is a block diagram illustrating an exemplary configuration of a report data management system 500 according to an embodiment of the present invention. As illustrated in FIG. 1, the report data management system 500 includes a report data management server 10, a relay 20, a plurality of client terminals 31 to 3N (N is an arbitrary positive integer), an enterprise resource planning system 100, an enterprise resource planning system 200, and an enterprise resource planning system 300. The report data management server 10 is connected with each of the client terminals 31 to 3N via a communication network 40 such as the Internet and the relay 20. The report data management server 10 is connected with the enterprise resource planning system 100, the enterprise resource planning system 200, and the enterprise resource planning system 300 via communication networks 51, 52, and 53 such as a LAN (Local Area Network) or a dedicated communication line, respectively. Further, the client terminal or the enterprise resource planning system may be configured to communicate with another client terminal or another enterprise resource planning system via the report data management server, or the client terminal or the enterprise resource planning system may not be configured to communicate with another client terminal or another enterprise resource planning system.

In the present embodiment, an example in which the report data management server 10 is used as the report data management device will be described.

The enterprise resource planning system 100 includes a core business server 110, a data warehouse server (DWH server) 120, and a process flow DB 101. The enterprise resource planning system 200 includes a DWH server 220 and a process flow DB 201. The enterprise resource planning system 300 includes a core business server 310 and a process flow DB 301.

Each of the plurality of the enterprise resource planning systems 100, 200, and 300 which differ in configuration fulfills a functions of an enterprise resource planning system by performing communication (transmission and reception of various kinds of information) with the report data management server 10 as necessary (that is, according to its function). In other words, in the report data management system 500, the system 200 having no core business server or the system 300 having no DWH server can also fulfill the function of the enterprise resource planning system by performing communication with the report data management server 10. Although not illustrated, the system having no process flow DB can also fulfill the function of the enterprise resource planning system by storing process flow data in the report data management server 10. Since a well-known technique is used for the core business server or the like included in each core business system, the following description will be made using the enterprise resource planning system 100 as an example.

The core business server 110 is a server managed, for example, by the administrator of the report data management system 500, and has various functions of managing report information related to various businesses (for example, functions of generating, updating, and holding information). The core business server 110 is configured with a general information processing device including an OS (Operating System) and a relational DB.

Here, the "report" is data generated on business, and is the general term of books and a type of slip. Further, the "books" denote one in which matters concerning purse of money or goods are filled, and the "slip" denotes one that is data becoming a basis when creating books and constitutes evidence of transactions and the like on a business. In the present embodiment, the case where the core business server 110 deals with "process data (data related to each business process) representing only slip data" as report data will be described as an example.

The DWH server 120 is a server managed, for example, by the system administrator of the present system, and includes various functions of implementing a data warehouse. Here, the "data warehouse" denotes a system that analyzes relevance between respective items from among business data such as report data accumulated in time series. Further, the DWH server 120 has a function of converting a file of a CSV (Comma Separated Values) format transferred from the core business server 110 into a predetermined data format and the like and registering various kinds of data to a predetermined storage region. Further, the DWH server 120 may be configured to extract data corresponding to each storage region from a state of CSV format without carrying out data format conversion.

The process flow DB 101 is a storage medium that stores process flow data configured with various kinds of process data (or report data) collected and marshaled by means of various kinds of information processing using various kinds of programs stored in the business application program DB (not illustrated) of the core business server 110. The process flow data will be described in detail later. In the present embodiment, the enterprise resource planning system 100 includes a business related data DB (not illustrated) managed by the DWH server 120, and the core business server 110 has a function of converting process data stored in the process flow DB 101 into a CSV format according to a predetermined extraction condition and transmitting the process data to the report data management server 10. In the present embodiment, the core business server 110 transfers a data file whose format is converted to CSV format by an FTP (File Transfer Protocol) to the report data management server 10.

The report data management server 10 is a server which is run by the ERP and provides various kinds of data through a communication network according to a request from a client terminal used by the user. For example, the report data management server 10 is configured with an information processing device such as a WWW server, and managed by the system administrator of the report data management system 500 or the administrator of the report data management server 10 different from the system administrator of the report data management system 500.

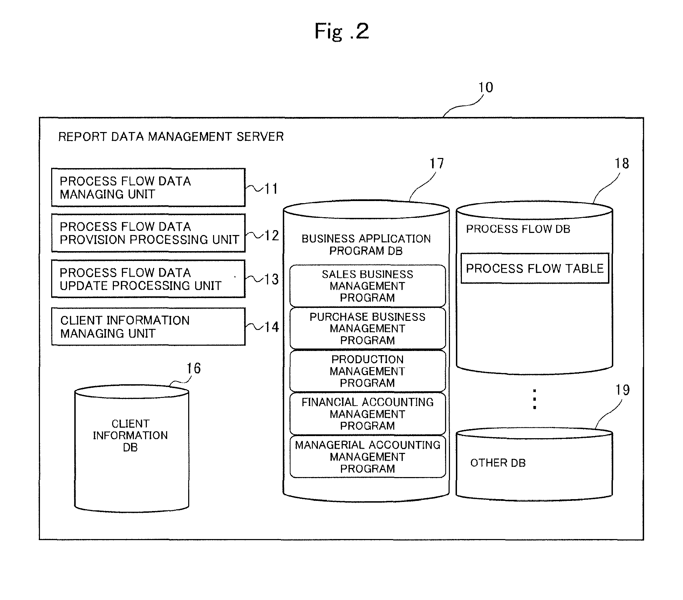

FIG. 2 is a block diagram illustrating an exemplary configuration of the report data management server 10. As illustrated in FIG. 2, the report data management server 10 includes a process flow data managing unit 11, a process flow data provision processing unit 12, a process flow data update processing unit 13, and a client information managing unit 14. The report data management server 10 further includes a client information DB 16, a business application program DB 17, a process flow DB 18, and the other DB 19 that stores various kinds of data (for example, data used by various kinds of programs stored in the business application program DB 17) necessary to implement the function of the general core business server. The other DB 19 is a portion which does not specifically relate to the present invention, and thus a detailed description thereof will not be made.

For example, the process flow data managing unit 11 performs a process related to management of the process flow data.

For example, the process flow data provision processing unit 12 performs a process related to management of the process flow data.

For example, the process flow data update processing unit 13 performs a process of updating the process flow data according to requests from the client terminals 31 to 3N.

For example, the client information managing unit 14 performs a process related to management of the client information.

The client information DB 16 is a storage medium that stores information related to clients. The client information includes credit information, a telephone number, current month sales, last month sales, current year sales, last year sales, a closing day, an account closing month, an agenda, last visit, a special note, and the like.

The business application program DB 17 is a storage medium that stores a program used for various kinds of businesses. Examples of the program stored in the business application program DB 17 include a sales business management program, a purchase business management program, a production management program, a financial accounting management program, and a managerial accounting management program.

The process flow DB 18 is a storage medium that stores various kinds of process data collected and marshaled by means of various kinds of information processing using various kinds of programs stored in the business application program DB 17. The process flow DB 18 of the present embodiment stores "process flow data" generated for each business unit in a series of business processes at the time of transaction as "report data. " Here, the "transaction" includes a transaction from a received order to a delivery of a product including a received order, a payment, and a shipment. The process flow DB 18 corresponds to a report data storage unit.

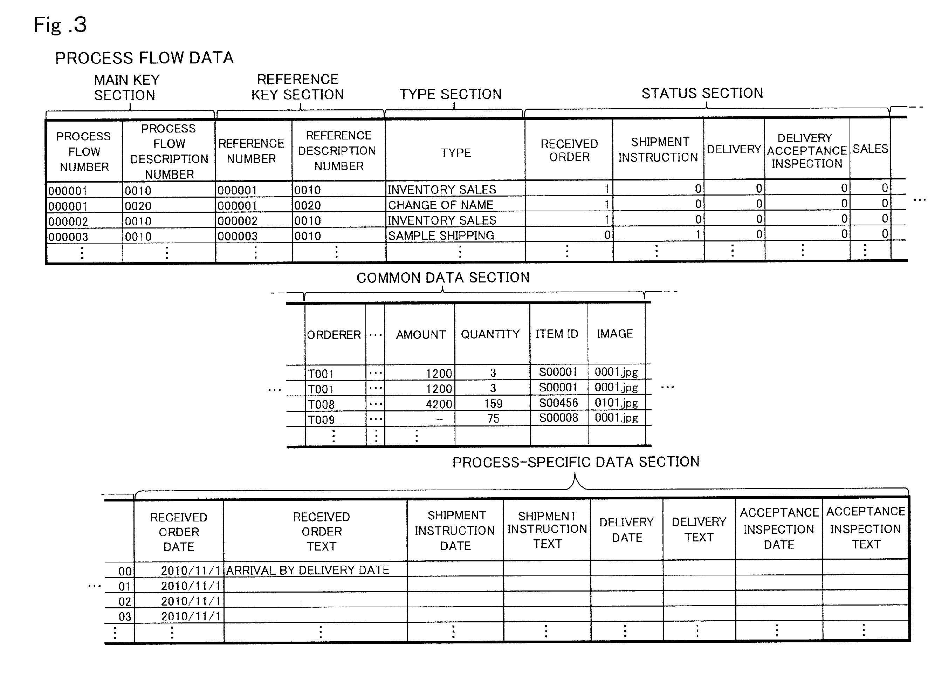

FIG. 3 is an explanatory diagram illustrating an exemplary storage state of process flow data in the process flow DB 18. As illustrated in FIG. 3, process flow data according to the present embodiment includes a main key section, a reference key section, a type section, a status section, a common data section, and a process-specific data section. Each item (that is, each column item in a process flow table PT) corresponding to each part of the process flow data represents the type of process data configuring the process flow data. In other words, data related to each of the business processes configuring the process flow is stored to be assigned to the respective parts configuring the process flow data. Further, process data related to a series of process flows in a business (for example, a series of process flow from a received order from a certain company to a deliver) is stored in the same entry in the process flow table PT (that is, the same row in the process flow table PT). Through this configuration, a correspondence relation between respective pieces of process data can be defined.

One process flow data is stored in the same entry (that is, the same row in the process flow table PT) in the process flow data table. In other words, the process flow data has a structure in which data related to one process flow is compiled in the same entry in the process flow table. Further, in the present embodiment, since process flow data of different types are registered in the table configured with the same items (column items), there are cases in which there is an item unnecessary for specific process flow data among the items (column items) configuring the table. In this case, in the process flow table, a part storing the unnecessary process data becomes null data (or "0").

Further, the report data management server 10 may be configured to manage the process flow data through a plurality of tables for each type which will be described later or for each data that is the same in part (for example, an orderer or the like) of content of common data which will be described later.

Here, the "main key section" refers to a part in which main key data which is data to uniquely specify process flow data among pieces of process flow data is stored. In the present embodiment, the main key section is configured with a process flow number and a process flow description number. In other words, in the present embodiment, a combination of the process flow number and the process flow description number serves as an identifier (ID) of each process flow data. The main key section is updated at the time of initial registration of process flow data. Here, the "time of initial registration of process flow data" refers to when another corresponding process data which belongs to a certain process flow but is not registered yet is registered. Here, "update" is assumed to include addition of data.

Further, the "process flow number" is an identifier to specify one process flow data. The process flow number is assigned to each process flow. In the present embodiment, the same process flow number is assigned to process flow data which is the same in the type and the orderer of the process flow data.

Further, the "process flow description number" is an identifier specifying specific process flow data among pieces of process flow data to which the same process flow number is assigned. For example, the process flow table illustrated in FIG. 3 can uniquely specify process flow data including process data representing that an order for a business of the amount "1200" and "2600" is received from an orderer "T001" by a combination of the process flow number "000001" and the process flow description number "0010" or "0020" in the business process "received order" in the type "inventory sales" of the process flow.

Next, the "reference key section" is a part in which reference key data which is data to specify another process flow data (or another process data) related to the process flow such as original transaction on sales returns among pieces of process flow data is stored. In the present embodiment, the reference key section is configured with a reference number and a reference description number, and is updated at the time of initial registration of process flow data.

The process flow number and the process flow description number of another process flow related to the process flow are stored in the reference number and the reference description number, respectively. However, when there is no other process flow related to the process flow such as a new transaction, data representing the same value as the main key section of the same entry is stored in the reference key section (that is, the process flow number and the process flow description number are stored in the reference number and the reference description number, respectively). Further, when the reference key section represents another process data related to the process flow, data specifying the type of process data is further stored in the reference key section.

The "type section" is a part in which data representing the type of process flow such as inventory sales or sample shipping among pieces of process flow data is stored. The type section is updated at the time of initial registration of process flow data. The type of process flow is not limited to inventory sales or sample shipping.

The "status section" is a part in which data (data representing a progress status of each of a plurality of business processes included in the process flow) representing the progress of the process flow among pieces of process flow data is stored. In the present embodiment, the status data represents the progress of each business process by setting "0" to an unfinished process and "1" to a finished process on a business process needed by the process flow. For example, as illustrated in FIG. 3, let us assume that when the process flow relates to "inventory sales" and the process flow includes business processes of "received order," "shipment," "delivery," "delivery acceptance inspection," and "sales," process-specific data (for example, a received order date) related to the business process "received order" is registered. In this case, in the status data, a part corresponding to "sales" becomes "1, " and the remaining parts remain in an initial state (that is, a state set to "0").

The status section in the present embodiment is updated for each process flow data. In other words, the status section is updated when it is determined that each business process is completed as a predetermined status change condition is satisfied. The status change condition is not specially limited, and in the present embodiment, "what all process-specific data corresponding to one business process is input" is assumed to be stored in a predetermined storage region of the enterprise resource planning system 100 as the status change condition.

The "common data section" is a part in which common data which is data (that is, data being common between the business processes included in the same process flow) not relying on the business process such as an orderer and a shipping destination among pieces of process flow data is stored. The common data section is updated at the time of initial registration of process flow data. The "common data section" includes an item ID uniquely identifying an item, a quantity, and an image indicating the item.

The "process-specific data section" is a part in which process-specific data which is data specific to each business process included in the same process flow such as the received order date or data (for example, text data representing a precaution such as "arrival within delivery date" or "fragile goods (handle with care) ") registered in each business process among pieces of process flow data is stored. The process-specific data section is updated for each business process. Thus, in the present embodiment, among pieces of process flow data, data relying on the business process is referred to as "process-specific data," and data not relying on the business process is referred to as "common data."

In the present embodiment, the process flow data has been described so far, and definitions of various terms illustrated in FIG. 3 will be briefly described below.

First, the "received order" refers to a state in which an order has been received from a customer, and a contract with the customer has been made. In other words, in the present embodiment, the "received order" means a state including when an order has been received from the user of the EC site as well as when an order has been received from a usual business partner.

The "shipment instruction" refers to a state in which an instruction to ship a product has been given to a warehouse man or a person in charge of physical distribution. In other words, in the present embodiment, the "shipment instruction" means a state in which the shipment instruction for a corresponding product has been given to the user who has purchased the product at the EC site.

The "delivery" refers to a state in which a product has been shipped from a warehouse and then started to be delivered. In other words, in the present embodiment, the "delivery" means a state in which a product purchased by the user of the EC site has been shipped from a warehouse.

The "acceptance inspection" refers to a state in which a customer has completed an acceptance inspection, and an ownership of a product has been transferred to the customer.

The "sales" refers to a state in which an acceptance inspection of a customer has been checked, and a debt amount on a customer has been fixed (that is, a debt has been recorded).

The term "acceptance inspection" is also used to indicate a "business of inspecting whether or not goods for supply or services satisfy an ordered specification (that is, a quantity, a color, a shape, and a quality as ordered) " or that "an ownership of an asset is transferred when an acceptance inspection is completed." Further, in financial accounting (or institutional accounting) or on the ERP system, in order to explicitly specify a transfer timing of an ownership of an asset, an event of "acceptance inspection" is defined to be distinguished from delivery.

In the present embodiment, the process flow data is assumed to include slip data that is generally used. For example, when slip data corresponds to a received order slip, the slip data is data in which received order slip header information, received order slip description information including orderer information, delivery date schedule, and the like are associated. Further, for example, the slip data is data stored in a structure in which it is searchable based on a search key such as the orderer information.

The report data management server 10 has a function of providing various kinds of data stored in the process flow DB 18 and the other DB 19 according to a request from a predetermined external device, that is, requests from the client terminals 31 to 3N and the enterprise resource planning systems 100, 200, and 300 in the present embodiment. In other words, the report data management server 10 has a function as the core business server. In other words, the report data management server 10 includes an ERP engine.

Even though not illustrated, in the present embodiment, the report data management server 10 is assumed to have a function as a DWH server having various functions of implementing a data warehouse. As the report data management server 10 has a structure of functioning as the ERP engine and the DWH server, it is possible to provide information requested as the enterprise resource planning system to the enterprise resource planning systems having different configurations (for example, the enterprise resource planning system 100 including the core business server and the DWH server, the enterprise resource planning system 200 including only the DWH server, and the enterprise resource planning system 300 including only the DWH server).

Each of the client terminals 31 to 3N is an information processing device including a central processing unit (CPU), a read only memory (ROM), a random access memory (RAM), a display unit, and the like. In the present embodiment, each of the client terminals 31 to 3N is assumed to include various kinds of applications that can be used to deal with report data, such as a WEB browser. In the present embodiment, for example, each of the client terminals 31 to 3N has a function of defining a query (a search item, a search key, an extraction key, and the like) used to acquire necessary report data (the process flow data in the present embodiment) from the report data management server 10 according to an operation input performed by the user, and transmitting the query to the report data management server 10.

In the present embodiment, each of the client terminals 31 to 3N has a function of communicating with the report data management server 10 through the relay 20 and the communication network 40 and outputting data acquired from the report data management server 10 to a display unit through a function of software such as a predetermined web application (a WEB browser).

Next, an operation of the report data management system 500 according to the present embodiment will be described with reference to the accompanying drawings. Here, a description of an operation or a process that does not specially relate to the present invention may not be made. In the present embodiment, the client terminal 31 will be described as an example.

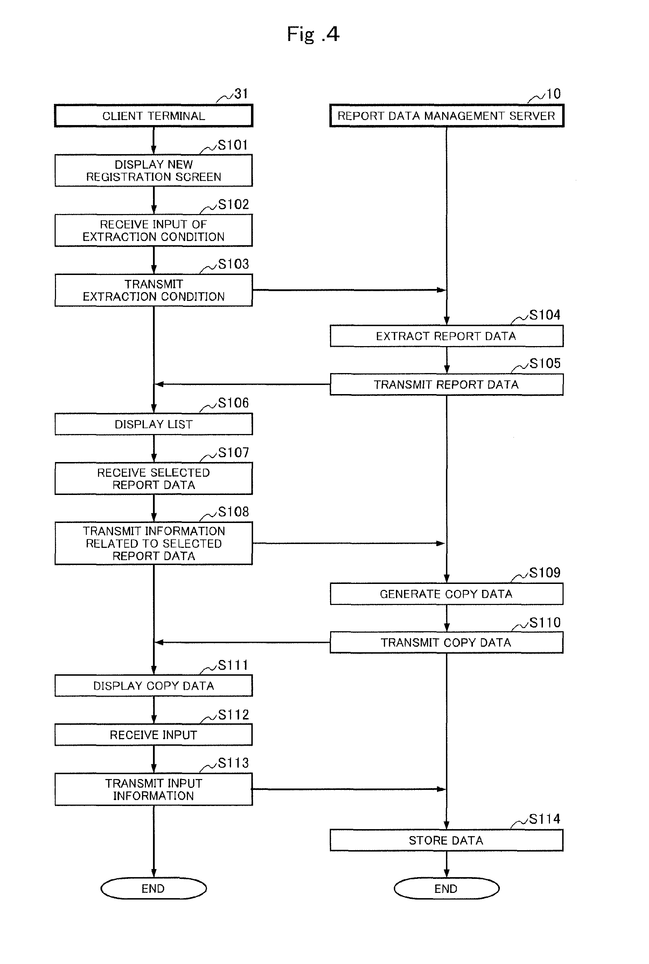

FIG. 4 is a flowchart illustrating an exemplary new registration process executed, for example, by the report data management server 10 in the report data management system 500 according to the present embodiment. Here, the description will proceed in connection with an example in which the report data management server 10 newly registers report data according to the request from the client terminal 31 used by a user X.

In the new registration process of the present embodiment, first, the client terminal 31 receives a predetermined input (for example, push-down of a new registration icon or the like) from the user, and displays a new registration screen used to register report data newly (step S101).

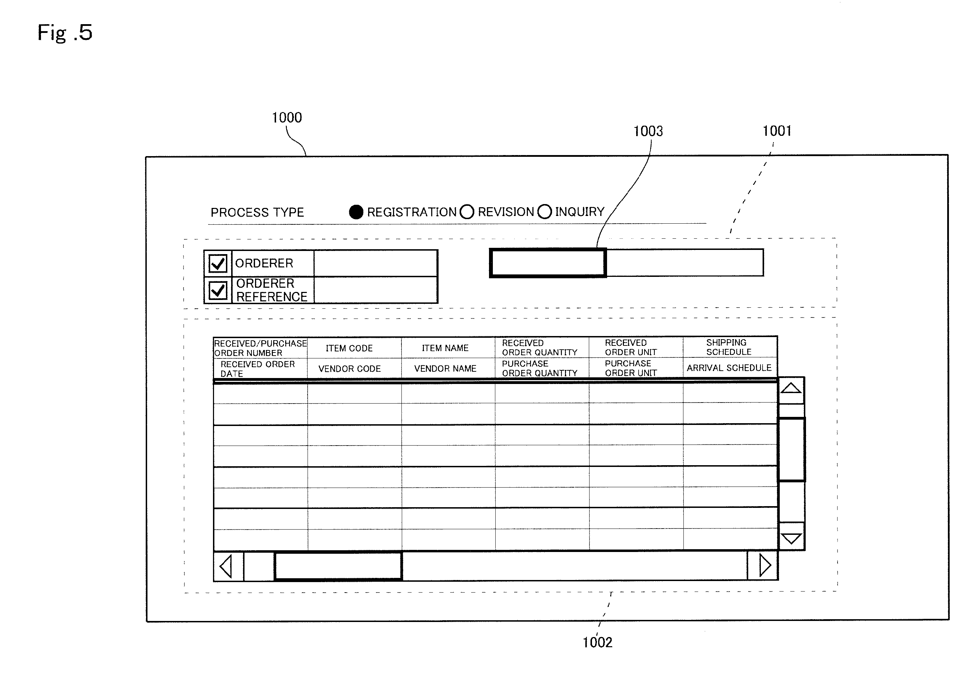

FIG. 5 is an explanatory diagram illustrating an exemplary new registration screen. As illustrated in FIG. 5, a new registration screen 1000 is provided with various kinds of input regions. Specifically, the new registration screen 1000 includes an extraction item input region 1001 and a report data list display region 1002.

Here, the extraction item input region 1001 is a region used to receive an input of an extraction item. The extraction item input region 1001 includes an orderer name input region 1003 used to input an orderer name. In the present embodiment, the orderer name input region 1003 is initially set as an item that is input initially.

The report data list display region 1002 is a display region for display extracted report data in the form of a list. When the new registration screen starts up, there is no extracted report data. Thus, the report data list display region 1002 is displayed in blank as illustrated in FIG. 5.

When the new registration screen is displayed, the client terminal 31 receives an input of an extraction condition from the user X (step S102).

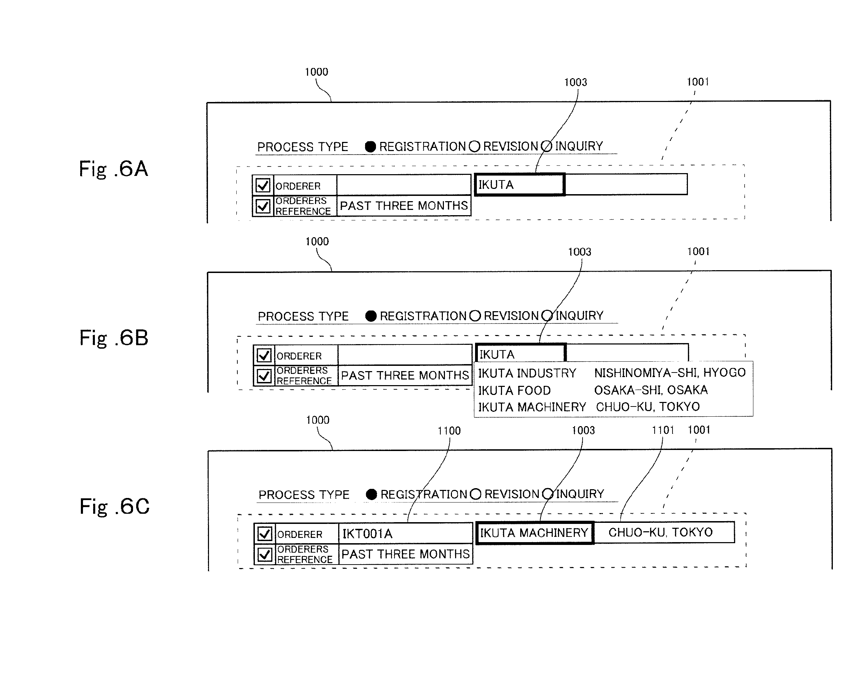

FIGS. 6A to 6C are explanatory diagrams illustrating exemplary states in which an extraction item is input in the new registration screen. Particularly FIG. 6A illustrates the orderer name input region 1003 to which a predetermined character string is input. FIG. 6B illustrates an example in which a character string corresponding to the character string input to the orderer name input region 1003 is displayed. FIG. 6C illustrates an example in which values are input to various kinds of items by selecting the character string displayed in FIG. 6B. As illustrated in FIGS. 6A to 6C, in the new registration screen 1000, when a character string of "Ikuta" is input to the orderer name input region 1003, orderers including the input character string of "Ikuta" are selectably displayed in the form of a list. When the selection on the orderers displayed in the form of a list is received, values corresponding to the orderer name are input to an orderer (code) display field 1100 and an orderer address display field 1101 and then displayed. As a result, the input of the extraction condition is finally decided.

When the input of the extraction condition is received, the client terminal 31 transmits the extraction condition to the report data management server 10 (step S103).

The report data management server 10 that has received the extraction condition extracts report data based on the extraction condition (step S104).

When the report data is extracted, the report data management server 10 transmits the extracted report data to the client terminal 31 (step S105).

The client terminal 31 that has received the extracted report data displays the report data in the form of a list (step S106).

In other words, the report data management system 500 (for example, the report data management device) performs control such that the report data is selectably displayed in the form of a list through steps S101 to 106.

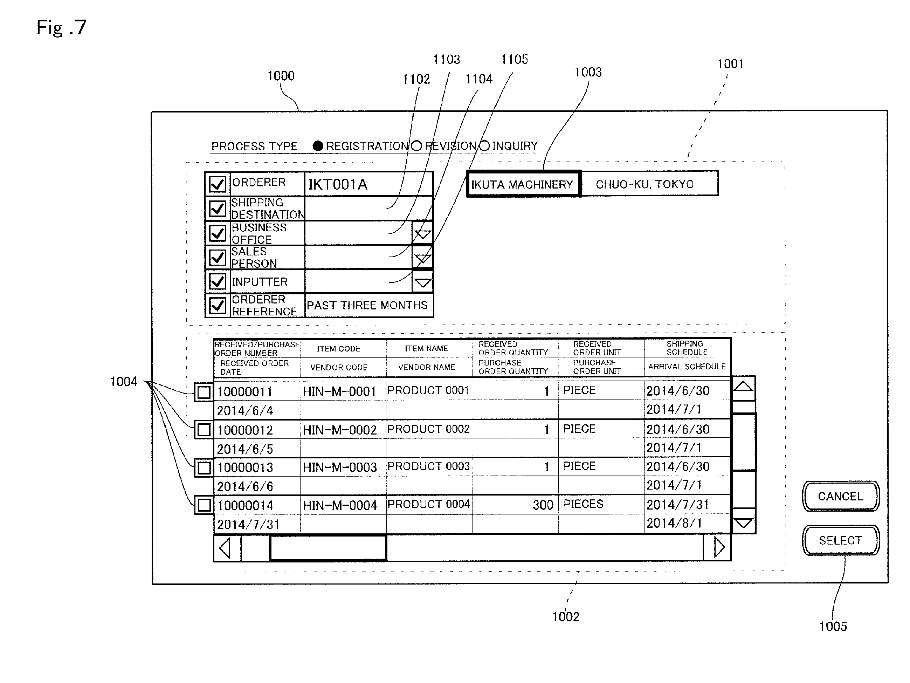

FIG. 7 is an explanatory diagram illustrating an exemplary new registration screen on which the extracted report data is displayed. As illustrated in FIG. 7, in the new registration screen 1000, the extracted report data is displayed on the report data list display region 1002. Further, a check box 1004 is displayed in the same rows of the extracted report data. Further, a selection button 1005 for confirming the selection is displayed. Furthermore, a shipping destination display region 1102 used to input a shipping destination, a business office display region 1103 used to input a business office, a sales person display region 1104 used to input a sales person, and an inputter display region 1105 used to input a person who inputs are displayed.

In the shipping destination display region 1102, a code indicating a shipping destination is displayed. The code indicating the shipping destination is input according to the selection on the ship-to parties that are displayed in the form of a list at the time of selection of the shipping destination. At this time, the ship-to parties displayed in the form of a list are assumed to be set for each client terminal in advance. Further, a shipping destination name corresponding to a code indicating a shipping destination and an address of the shipping destination are displayed below the orderer name input region 1003.

Further, in each of the business office display region 1103, the sales person display region 1104, and the inputter display region 1105, an input item set for each client terminal in advance is selected in a pull-down form.

Although not particularly illustrated, the report data management system 500 may be configured to set a narrow-down region used to further narrow the report data displayed in the form of a list down. For example, the report data management system 500 may be configured to be able to further narrow report data down by a common product name (that is, an item) in the new registration screen in which the report data is displayed in the form of a list. An item to be narrowed down is not limited to the product name.

When the report data is displayed in the form of a list, the client terminal 31 receives selection of report data from the user X (step S107). At this time, the number of pieces of report data to be selected is at least one or more. In other words, in the report data management system 500, a plurality of pieces of report data may be selected.

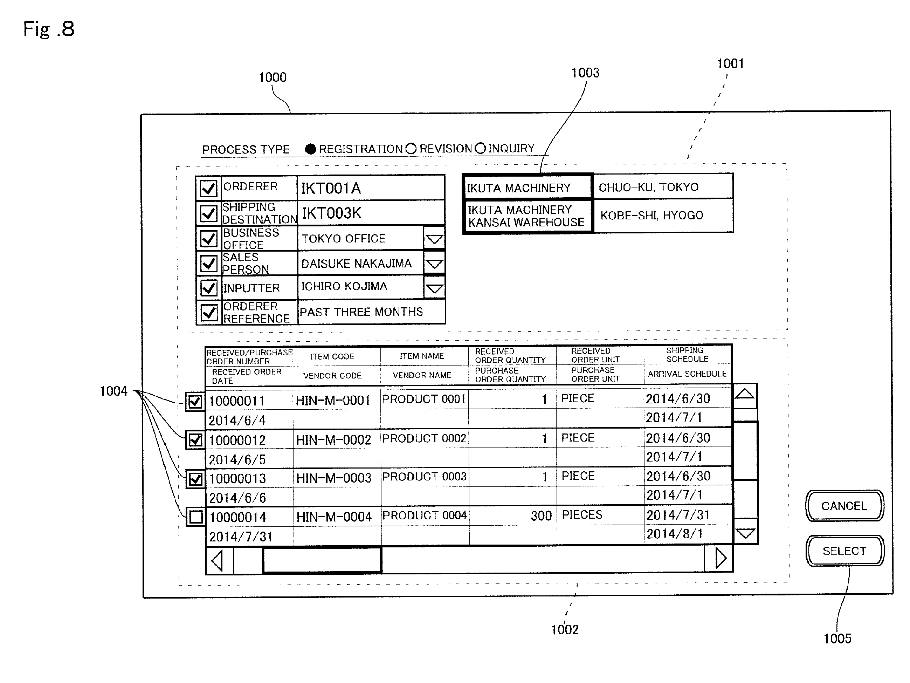

FIG. 8 is an explanatory diagram illustrating an exemplary new registration screen in which the report data is selected. As illustrated in FIG. 8, an input of selecting the report data is performed by selecting the check box 1004. Further, the selection of the report data is not limited to this example, and the selection may be performed by clicking a row of report data or the like.

When the report data is selected, the client terminal 31 transmits information related to the selected report data to the report data management server 10 (step S108). For example, the client terminal 31 transmits the information related to the selected report data to the report data management server 10 when the selection button 1005 is pushed down.

The report data management server 10 that has received the information related to the selected report data generates copy data of the selected report data (step S109).

When the copy data of the selected report data is generated, the report data management server 10 transmits the generated data to the client terminal 31 (step S110).

Further, in the present embodiment, the configuration of generating the copy data through the server (the report data management server 10) according to the operation described in steps S108 to 110 is provided, but the present invention is not limited to this configuration. In other words, the copy data may be generated by the client terminal 31.

The client terminal 31 that has received the copy data causes the copy data to be displayed on the report data list display region 1002 of the new registration screen 1000 (step S111).

In other words, the report data management system 500 (for example, the report data management device) performs control such that report data is copied and displayed so that partial data of the selected report data is rewritable through steps S108 to 111.

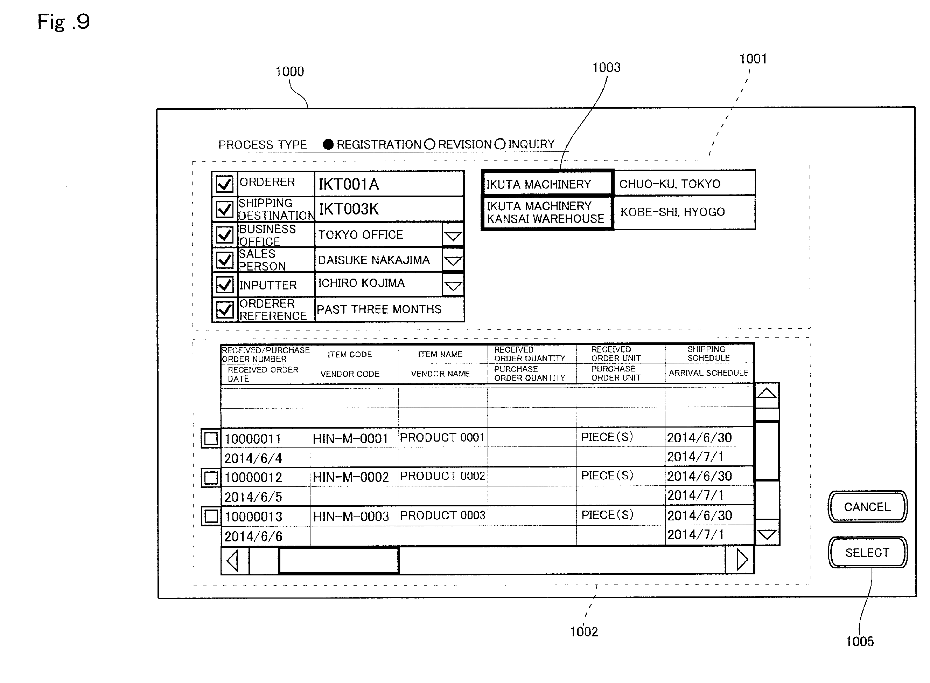

FIG. 9 is an explanatory diagram illustrating an exemplary new registration screen on which the copy data of the report data selected in FIG. 8 is displayed. As illustrated in FIG. 9, the new registration screen 1000 that displays the copy data includes various kinds of buttons such as a confirm button 1006. Further, in the new registration screen 1000, the copy data is displayed in a state in which a portion of "purchase order quantity" in the report data is blank as illustrated in FIG. 9.

Here, in the present embodiment, a configuration in which report data is copied and displayed such that at least one of items other than an item corresponding to the extraction condition input in step S102 is rewritable (is displayed in blank) is provided as illustrated in FIG. 9. However, an item that is displayed to be rewritable is not limited to this configuration. For example, an item that is displayed to be rewritable may include an item corresponding to the extraction condition.

Here, in the present embodiment, the copy data displayed on the new registration screen 1000 is displayed with an accompanying blank portion as illustrated in FIG. 9. However, the display state of the copy data is not limited to this configuration. For example, the copy data may be configured such that the selected report data is copied and displayed "as is" without an accompanying blank portion, but each item is overwritable. Further, for example, the copy data may be configured such that an item displayed with an accompanying blank portion is overwritable. At this time, the copy data may be configured such that a previously set item becomes an overwritable item.

When the copy data is displayed, the client terminal 31 receives an input on a blank item from the user X (step S112). In other words, the report data management system 500 receives a rewrite input.

When an input is received from the user, the client terminal 31 transmits the input data (or the copy data for which the rewrite input is received) to the report data management server 10 as the new registration data (step S113). In the present embodiment, when the user X pushes the confirm button 1006 down, the client terminal 31 transmits the input data (or the copy data for which the rewrite input is received) to the report data management server 10 as the new registration data.

The report data management server 10 that has received the new registration data stores the new registration data in the process flow DB 18 (step S114). In other words, the report data management system 500 stores the data for which the rewrite input is received in the report data storage unit (in the present embodiment, the process flow DB 18 since the new registration data is the process flow data) as the new report data.

Further, although not particularly illustrated, it may be determined whether or not a transaction in which the credit limit is exceeded is made before the data for which the rewrite input is received is registered as the new report data. Specifically, the report data management system 500 includes an orderer data storage unit (the client information DB 16) that stores orderer data including a credit limit of an orderer. The report data management system 500 including the client information DB 16 determines whether or not a transaction in which the credit limit is exceeded is made with reference to the orderer data when the rewrite input is received (when the process in step S112 or step S114 is performed), and displays a determination result before storing the data in the process flowDB 18 as new report data. According to this configuration, it is possible to reduce the data input burden when new report data is generated and managed.

Further, although not particularly illustrated, an allocation process may be performed before the data for which the rewrite input is received is registered as the new report data. Specifically, the report data management system 500 may be configured to include a product information storage unit that stores product information including information related to an inventory of products and information related to an arrival schedule of a product, determine the presence or absence of an inventory from input data, and rewrite process data of report data so that an arrival schedule of a product is checked and allocated, an arrival schedule of a substitute product is checked and allocated, or switching to direct shipping is performed and then an order is placed when there is a shortage of an inventory. According to this configuration, it is possible to reduce the data input burden when new report data is generated and managed.

The exemplary new registration process performed by, for example, the report data management server 10 in the report data management system 500 has been described above.

As described above, in the above embodiment, the report data management system (for example, the report data management system 500 or the report data management server 10. The same applies hereinafter.) that is run by the ERP and manages report data generated for each business unit in a business processes includes report data storage unit (for example, the process flow DB 18) that stores the report data, and is configured to perform control such that the report data is selectably displayed in the form of a list, perform control such that at least one or more pieces of report data among report data displayed in the form of a list is selected, and the report data is copied and displayed so that partial data of the selected report data is rewritable, receive a rewrite input, and store the data for which the rewrite input is received in the report data storage unit as the new report data. According to this configuration, since an input is simplified when the new report data is stored, it is possible to accurately extract and use past data. In other words, it is possible to save time and efforts when the received order report data is newly registered.

Further, in the above embodiment, the report data management system is configured to receive an input of the extraction condition for extracting the report data to be displayed in the form of a list, extract the report data corresponding to the input extraction condition, and perform control such that the extracted report data is displayed in the form of a list. Further, the report data management system is configured to perform control such that the selected report data is copied and displayed such that at least one of items other than the item corresponding to the input extraction condition is rewritable. According to this configuration, it is possible to effectively utilize available data among past data. Thus, it is possible to save time and efforts occurring when the report data is newly input.

Further, in the above embodiment, the report data management system includes the orderer data storage unit (the client information DB 16) that stores the orderer data including the credit limit of the orderer, and is configured to determine whether or not a transaction in which the credit limit is exceeded is made with reference to the orderer data when the rewrite input is received and perform control such that a determination result is displayed before storing the data in the report data storage unit as the new report data. According to this configuration, it is possible to understand whether or not the received order in which the credit limit is exceeded has been performed before the report data is newly registered. Thus, it is possible to reduce the report data management burden.

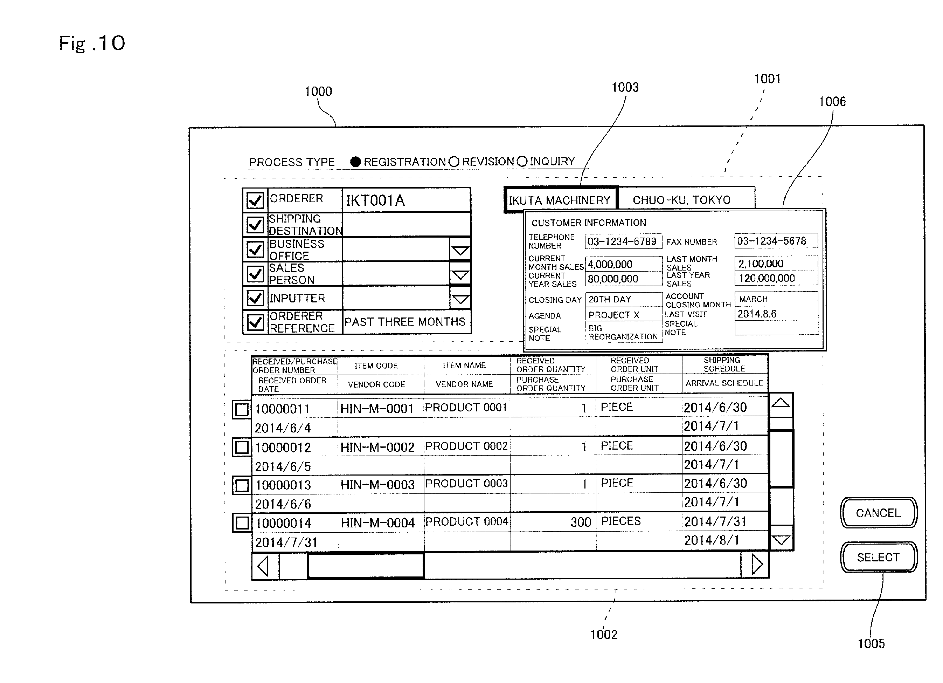

Further, although not particularly set forth in the above embodiment, the report data management system may be configured to perform control such that an orderer information display region for displaying detailed information of the orderer shown in the report data being displayed in the form of a list is displayed with reference to the orderer data as a predetermined user input is received when the report data is displayed in the form of a list. FIG. 10 is an explanatory diagram illustrating an exemplary new registration screen on which detailed information of the orderer is displayed. As illustrated in FIG. 10, the orderer information display region displayed on the new registration screen displays the detailed information of the orderer. According to this configuration, it is possible to newly input the report data while viewing detailed data of the orderer. Thus, it is possible to save various kinds of time and efforts occurring when the received order report data is newly input.

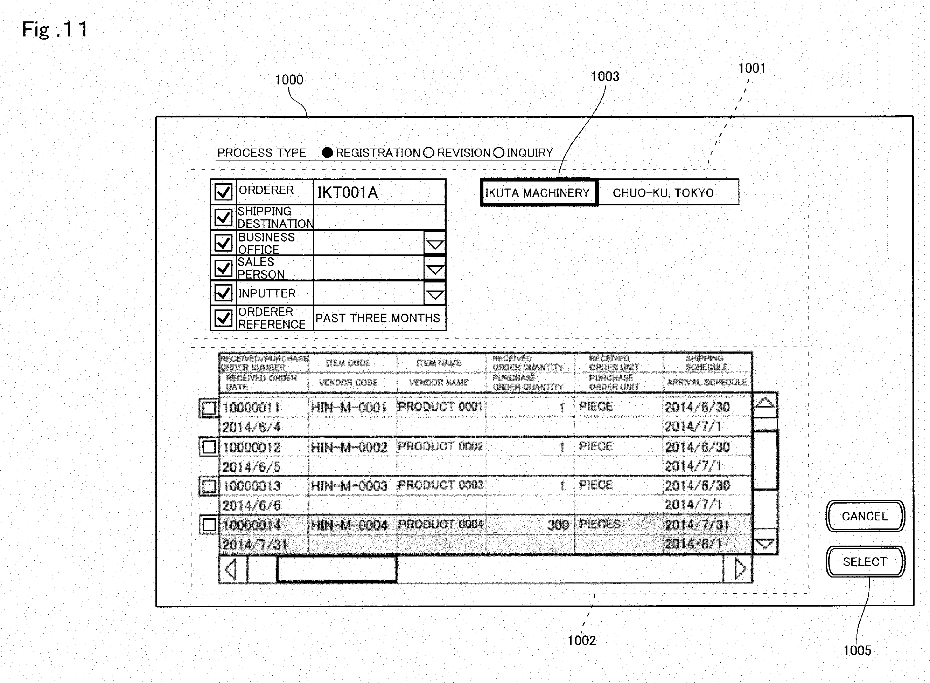

Further, although not particularly set forth in the above embodiment, the report data management system 500 may be configured to perform control such that the report data is displayed in the form of a list so that the progress of the business process is understood in the new registration screen. FIG. 11 is an explanatory diagram illustrating an exemplary new registration screen in which the report data is displayed in the form of a list so that the progress of the business process is understood. As illustrated in FIG. 11, the report data displayed in the report data list display region 1002 may be configured so that the progress of a process indicated by the report data is understood by a color added to the report data (according to the present embodiment, a color added to a row of report data). According to this configuration, it is possible to newly input the report data while viewing the progress of the business process. Thus, it is possible to save various kinds of time and efforts occurring when the received order report data is newly input.

Further, although not particularly set forth in the above embodiment, an item that is rewritably input may be limited according to an inputter selected through the inputter display region 1105. Specifically, the client terminal may include a storage device that stores inputter information in which an item that is rewritably input is associated with an inputter and be configured so that an item determined to correspond to an inputter with reference to the inputter information becomes a rewritably input item of copy data to be displayed.

Further, the report data management system 500 executes the above-described processes according to processing programs stored in a storage medium. Furthermore, various kinds of processes described above are executed by a computer.

Further, the report data management system 500 has been described in connection with the example in which the terminal (for example, the client terminals 31 to 3N) operated by the user is different from the terminal (for example, the report data management server 10) managed by the administrator of the present system. However, the present system is not limited to this configuration. The report data management server 10 may be configured to include various kinds of components such as a display device and perform the same function as the client terminals 31 to 3N.

According to the present invention, it is useful in reducing the data input burden when the new report data is generated and managed.

## Claims

1. A report data management device that is run by an enterprise resource planning (ERP) and manages report data generated for each business unit in a business process, comprising:
a report data storage unit that stores report data;
a list display control unit that performs control such that the report data is selectably displayed in a form of a list;
a selection receiving unit that receives selection of at least one or more pieces of report data among the report data displayed in the form of the list;
a copy display control unit that performs control such that the report data is copied and displayed such that partial data of the selected report data is rewritable;
a rewrite input receiving unit that receives a rewrite input; and
a storing unit that stores data for which the rewrite input is received in the report data storage unit as new report data.

2. The report data management device according to claim 1, further comprising:
a condition input receiving unit that receives an input of an extraction condition for extracting report data that is displayed in a form of a list; and
an extracting unit that extracts the report data corresponding to the input extraction condition,
wherein the list display control unit performs control such that the report data extracted by the extracting unit is displayed in the form of the list, and
the copy display control unit performs control such that the selected report data is copied and displayed such that at least one of items other than an item corresponding to the input extraction condition is rewritable.

3. The report data management device according to claim 1 or 2, further comprising:
an orderer data storage unit that stores orderer data including a credit limit of an orderer;
a credit determining unit that determines whether or not a transaction in which the credit limit is exceeded is made with reference to the orderer data when the rewrite input is received; and
a result display control unit that performs control such that a determination result is displayed before the data is stored in the report data storage unit as the new report data.

4. The report data management device according to claim 3, further comprising:
an orderer information display control unit that performs control such that an orderer information display region for displaying detailed information of an orderer shown in the report data displayed in the form of the list is displayed as a predetermined user input is received when the report data is displayed in the form of the list,
wherein the orderer information display control unit performs control with reference to the orderer data such that the orderer information display region is displayed.

5. The report data management device according to any one of claims 1 to 4,
wherein the list display control unit performs control such that the report data is displayed in the form of the list such that a progress of the business process is understood.

6. A non-transitory computer-readable storage medium storing a report data management program for controlling an operation of a report data management device that is run by an ERP, manages report data generated for each business unit in a business process, and includes a report data storage unit storing the report data, the report data management program causing the report data management device to execute:
a list display control process of performing control such that the report data is selectably displayed in a form of a list;
a selection receiving process of receiving selection of at least one or more pieces of report data among the report data displayed in the form of the list;
a copy display control process of performing control such that the report data is copied and displayed such that partial data of the selected report data is rewritable;
a rewrite input receiving process of receiving a rewrite input; and
a storing process of storing data for which the rewrite input is received in the report data storage unit as new report data.

7. A report data management method of managing report data generated for each business unit in a business process through a computer run by an ERP, comprising:
a list display control process of performing control such that the report data is selectably displayed in a form of a list with reference to a report data storage unit storing the report data;
a selection receiving process of receiving selection of at least one or more pieces of report data among the report data displayed in the form of the list;
a copy display control process of performing control such that the report data is copied and displayed such that partial data of the selected report data is rewritable;
a rewrite input receiving process of receiving a rewrite input; and
a storing process of storing data for which the rewrite input is received in the report data storage unit as new report data.
